(19) Europäisches Patentamt
European Patent Office
Office européen des brevets

(11) **EP 2 610 668 A1**

(12) **EUROPEAN PATENT APPLICATION**
published in accordance with Art. 153(4) EPC

(43) Date of publication:
**03.07.2013 Bulletin 2013/27**

(51) Int Cl.:
**G02F 1/1335** (2006.01)     **G02B 1/11** (2006.01)
**G02B 5/02** (2006.01)      **G02B 5/30** (2006.01)

(21) Application number: **11819805.0**

(22) Date of filing: **11.08.2011**

(86) International application number:
**PCT/JP2011/068392**

(87) International publication number:
**WO 2012/026341 (01.03.2012 Gazette 2012/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2010 JP 2010186523**

(71) Applicant: **Sharp Kabushiki Kaisha**
**Osaka-shi, Osaka 545-8522 (JP)**

(72) Inventors:
• **MINOURA, Kiyoshi**
**Osaka-shi, Osaka 545-8522 (JP)**

• **SAKAI, Akira**
**Osaka-shi, Osaka 545-8522 (JP)**
• **TAGUCHI, Tokio**
**Osaka-shi, Osaka 545-8522 (JP)**

(74) Representative: **Müller - Hoffmann & Partner Patentanwälte**
**Innere Wiener Strasse 17**
**81667 München (DE)**

(54) **LIQUID CRYSTAL DISPLAY PANEL**

(57)     A liquid crystal display panel **(100)** of the present invention is capable of displaying in a normally black mode. The liquid crystal display panel **(100)** includes: a liquid crystal cell **(12)** which includes a liquid crystal layer and a pair of substrates; a first polarizing plate **(14)** provided on a rear surface side of the liquid crystal cell **(12)**; a second polarizing plate **(16)** provided on a viewer side of the liquid crystal cell; and an antireflection layer **(18)** provided on a viewer side of the second polarizing plate, the antireflection layer having a moth-eye structure, wherein a transmission axis of the first polarizing plate **(14)** is parallel to a vertical direction in a display plane, and a transmission axis of the second polarizing plate **(16)** is parallel to a horizontal direction in the display plane. According to the present invention, a pale black state in oblique viewing angles is prevented.

FIG.1

(a)

(b)

EP 2 610 668 A1

**Description**

<u>TECHNICAL FIELD</u>

The present invention relates to a liquid crystal display panel. Particularly, the present invention is suitably applicable to a liquid crystal display panel which performs display in the normally-black (NB) mode.

<u>BACKGROUND ART</u>

Recently, vertical alignment (VA) mode liquid crystal display panels which perform display in the NB mode have been widely used as large size display panels, such as liquid crystal television displays. Particularly, to improve the viewing angle characteristics, multidomain VA (MVA) mode liquid crystal display panels, in which one pixel includes a plurality of domains among which the orientation azimuth of liquid crystal molecules is different, have been widely used. The plurality of domains formed in one pixel typically include four types of domains in which the orientation azimuths of liquid crystal molecules in respective domains are 45°, 135°, 225°, and 315°. Here, it is supposed that the azimuthal angle of 0° is identical with the 3 o'clock direction of the clock dial and that the counterclockwise direction is the positive direction. Two polarizing plates which are in a crossed Nicols arrangement with a liquid crystal layer interposed therebetween are arranged such that the transmission axis (= polarization axis) of one of the polarizing plates is coincident with the horizontal direction in the display plane (parallel to the direction of 3 o'clock to 9 o'clock) and the transmission axis of the other polarizing plate is coincident with the vertical direction (parallel to the direction of 6 o'clock to 12 o'clock). This is for the purpose of improving the light utilization efficiency, i.e., the display luminance.

In the MVA mode, the liquid crystal layer sides of a pair of substrates that oppose each other with a vertical alignment liquid crystal layer interposed therebetween are provided with an alignment regulating structure (also referred to as "domain regulating structure" so that a plurality of domains are formed. The alignment regulating structure used may be a slit (opening portion) or a rib (elevated structure) formed in an electrode and provides an alignment regulating force from the both sides of the liquid crystal layer (for example, Patent Documents 1 and 2).

However, when a slit or rib is used, the alignment regulating force that is exerted on liquid crystal molecules is nonuniform in a pixel because the slit or rib is linear, and therefore, there is a problem that for example the distribution of the response speed becomes nonuniform, in comparison to a case where the pretilt direction is defined by alignment films which have been used in the conventional TN mode. Further, there is another problem that the light transmittance decreases in a region where the slit or rib is provided, so that the display luminance decreases.

To avoid there problems, it is preferred that, in the VA mode liquid crystal display devices, the alignment division structure is formed by defining the pretilt direction with the use of alignment films. A known one of such VA mode liquid crystal display devices is VA mode (also referred to as "RTN (Reverse Twisted Nematic) mode" or "VATN (Vertical Alignment Twisted Nematic) mode") in which vertical alignment films which make the pretilt directions at the substrates perpendicular to each other are used such that liquid crystal molecules have a twisted configuration (see, for example, Patent Documents 3 to 6). In the RTN mode, the pretilt direction of the liquid crystal molecules which is defined by each vertical alignment film is parallel to or perpendicular to the absorption axes of a pair of polarizing plates that are in a crossed Nicols arrangement with the liquid crystal layer interposed therebetween. In the RTN mode, the tilt direction of liquid crystal molecules at the central area in the layer plane of the liquid crystal layer and in the thickness direction in the presence of a sufficient applied voltage (at least a signal voltage which is necessary for display of the highest grayscale level) across the liquid crystal layer is identical with a direction which generally halves the two pretilt directions that are defined by a pair of alignment films. This tilt direction of the liquid crystal molecules at the central area of the liquid crystal layer corresponds to the alignment azimuth of liquid crystal molecules in each domain. The method for defining the pretilt direction is preferably a photoalignment method. The applicant of the present application is the first one in the world who put it into practical use (which is referred to as "UV$^2$A technique").

When the applicant first mass-produced liquid crystal television displays which carry MVA mode liquid crystal display panels as the first manufacturer in the world and supplied them into the market, they were designed such that one of the two polarizing plates that were in a crossed Nicols arrangement, which was on the viewer side, had a transmission axis which was coincident with the vertical direction in the display plane (when compared to the clock dial, a direction which was parallel to the direction of 6 o'clock to 12 o'clock). This arrangement of the transmission axis of the polarizing plate has been, at present, a *de facto* standard in the VA mode (including MVA mode and RTN mode) liquid crystal display panels (particularly, large size liquid crystal display panels for use in TV devices, for example).

The above-described arrangement of the transmission axis of the polarizing plate was selected for enabling a viewer wearing polarized sunglasses to view a video image. Note that the polarization axis of the polarized sunglasses was arranged so as to coincide with the vertical direction in order to remove S-polarization that is abundantly included in the reflection from a horizontal surface and that may particularly be a cause of glare when used outdoors (the polarization axis of the S-polarization is coincident with the horizontal direction).

Another example of the NB mode which has been employed for liquid crystal display panels for television use is the IPS (In Plane Switching) mode. Recently, liquid crystal display panels which employ the blue phase have been under development. One of the known IPS mode liquid crystal display panels is configured such that the transmission axes of the polarizing plates are arranged so as to be in the azimuth of 45°. However, for the above reasons, arranging the transmission axis of the polarizing plate on the viewer side so as to coincide with the horizontal direction in the display plane has been avoided.

On the other hand, the applicant developed an antireflection film which has a moth-eye structure (sometimes referred to as "moth-eye type antireflection film"). The moth-eye structure has minute raised portions (which have a conical or bell-like shape), and the effective refractive index continuously varies. Therefore, the reflectance can be decreased to a level which is less than 1% and, furthermore, to a level which is not more than 0.2%. The moth-eye type antireflection film is capable of preventing reflection over a wide wavelength range of light and has a wide incidence angle range as compared with an antireflection film which is manufactured with the use of a dielectric multilayer film (Patent Documents 7 to 10). One of the moth-eye structure fabrication methods which uses an anodized porous alumina layer that is obtained by anodization of aluminum is excellent in mass-productivity (Patent Documents 8 to 10).

The entirety of the disclosures of Patent Documents 1 to 10 are incorporated by reference in this specification.

## CITATION LIST

### PATENT LITERATURE

Patent Document 1: Japanese Laid-Open Patent Publication No. 11-242225 (Specification of US 6,724,452)
Patent Document 2: Japanese Laid-Open Patent Publication No. 2000-155317 (Specification of US 6,879,364)
Patent Document 3: Japanese Laid-Open Patent Publication No. 11-352486
Patent Document 4: Japanese Laid-Open Patent Publication No. 2002-277877
Patent Document 5: Japanese Laid-Open Patent Publication No. 11-133429
Patent Document 6: Japanese Laid-Open Patent Publication No. 10-123576
Patent Document 7: Japanese PCT National Phase Laid-Open Publication No. 2001-517319
Patent Document 8: Japanese PCT National Phase Laid-Open Publication No. 2003-531962
Patent Document 9: Japanese Laid-Open Patent Publication No. 2005-156695
Patent Document 10: WO 2006/059686

## SUMMARY OF INVENTION

### TECHNICAL PROBLEM

The inventors of the present application placed an antireflection film which has a moth-eye structure on a VA mode liquid crystal display panel and encountered an unexpected problem that a pale black state was conspicuous at oblique viewing angles. This problem is not limited to the VA mode liquid crystal display panels but may occur in liquid crystal display devices which operate in a mode which is different from the NB mode.

The present invention was conceived for the purpose of solving the above problems. One of the objects of the present invention is to prevent a pale black state which occurs when viewed at an oblique viewing angle in a normally-black mode liquid crystal display panel which includes an antireflection film which has a moth-eye structure.

### SOLUTION TO PROBLEM

A liquid crystal display panel of the present invention is a liquid crystal display panel which is capable of displaying in a normally black mode, including: a liquid crystal cell which includes a liquid crystal layer and a pair of substrates; a first polarizing plate provided on a rear surface side of the liquid crystal cell; a second polarizing plate provided on a viewer side of the liquid crystal cell; and an antireflection layer provided on a viewer side of the second polarizing plate, the antireflection layer having a moth-eye structure, wherein a transmission axis of the first polarizing plate is parallel to a vertical direction in a display plane, and a transmission axis of the second polarizing plate is parallel to a horizontal direction in the display plane.

The liquid crystal display panel of one embodiment is a vertical alignment mode, IPS mode, or blue phase mode liquid crystal display panel.

In one embodiment, a length of the liquid crystal cell along the horizontal direction in the display plane is greater than a length of the liquid crystal cell along the vertical direction in the display plane.

The liquid crystal display panel of one embodiment further includes an antiglare layer provided on a viewer side of the second polarizing plate, wherein a haze ratio of the antiglare layer is less than 10%.

In one embodiment, the antiglare layer is integral with the antireflection layer.

A liquid crystal display device of the present invention includes: any of the above-described liquid crystal display panel; and a backlight unit provided on a rear surface side of the first polarizing plate.

## ADVANTAGEOUS EFFECTS OF INVENTION

According to the present invention, an antireflection film which has a moth-eye structure is placed on a VA mode liquid crystal display panel, whereby occurrence of such a problem that a pale black state is conspicuous at oblique viewing angles can be prevented.

## BRIEF DESCRIPTION OF DRAWINGS

[FIG. **1**] **(a)** is an exploded perspective view schematically showing a liquid crystal display panel **100** of an embodiment of the present invention. **(b)** is a top view of the liquid crystal display panel **100,** in which reflection of light emitted from a backlight is illustrated together.

[FIG. **2**] **(a)** is an exploded perspective view schematically showing a liquid crystal display panel **500** of a comparative example. **(b)** and **(c)** are top views of a liquid crystal display panel **500'** and the liquid crystal display panel **500,** in which reflection of light emitted from a backlight is illustrated together.

[FIG. **3**] **(a)** to **(c)** are diagrams for illustrating a model which was used for calculation of the reflectance of a moth-eye type antireflection layer.

[FIG. **4**] **(a)** to **(f)** are graphs showing the calculation results of the reflectances for the S-wave and the P-wave of various moth-eye type antireflection layers, where the horizontal axis represents the incidence angle (polar angle) and the vertical axis represents the reflectance.

[FIG. **5**] **(a)** is a graph showing the actual measurement values of the reflectances for the S-wave and the P-wave of a moth-eye type antireflection layer. **(b)** is a SEM image of the moth-eye type antireflection layer.

[FIG. **6**] Graphs for illustrating the relationship between the arrangement of the transmission axes of polarizing plates and the transmittance in the black display state (black luminance). **(a)** shows the actual measurement values in the case where the moth-eye type antireflection film is not provided. **(b)** shows the actual measurement values in the case where the moth-eye type antireflection film is provided.

[FIG. **7**] Graphs for illustrating the polar angle dependence of the transmittance in the white display state (white luminance) of liquid crystal display panels whose viewer side surfaces were in different states of treatment (AG treatment and antireflection treatment). **(a)** to **(c)** show the relative luminance. **(d)** to **(f)** show the results normalized with respect to the white luminance of an untreated liquid crystal display panel (luminance increase rate).

[FIG. **8**] Graphs for illustrating the polar angle dependence of the transmittance in the black display state (black luminance) of liquid crystal display panels whose viewer side surfaces were in different states of treatment (AG treatment and antireflection treatment). **(a)** to **(c)** show the relative luminance. **(d)** to **(f)** show the results normalized with respect to the black luminance of an untreated liquid crystal display panel (luminance increase rate).

[FIG. **9**] Graphs corresponding to FIG. **7** and showing the results of an examination as to the difference in the state of treatment of the viewer side surface of liquid crystal display panels which utilize circular polarization.

[FIG. **10**] Graphs corresponding to FIG. **8** and showing the results of an examination as to the difference in the state of treatment of the viewer side surface of liquid crystal display panels which utilize circular polarization.

## DESCRIPTION OF EMBODIMENTS

Hereinafter, a liquid crystal display panel of an embodiment of the present invention is described with reference to the drawings, although the present invention is not limited to the exemplified embodiment.

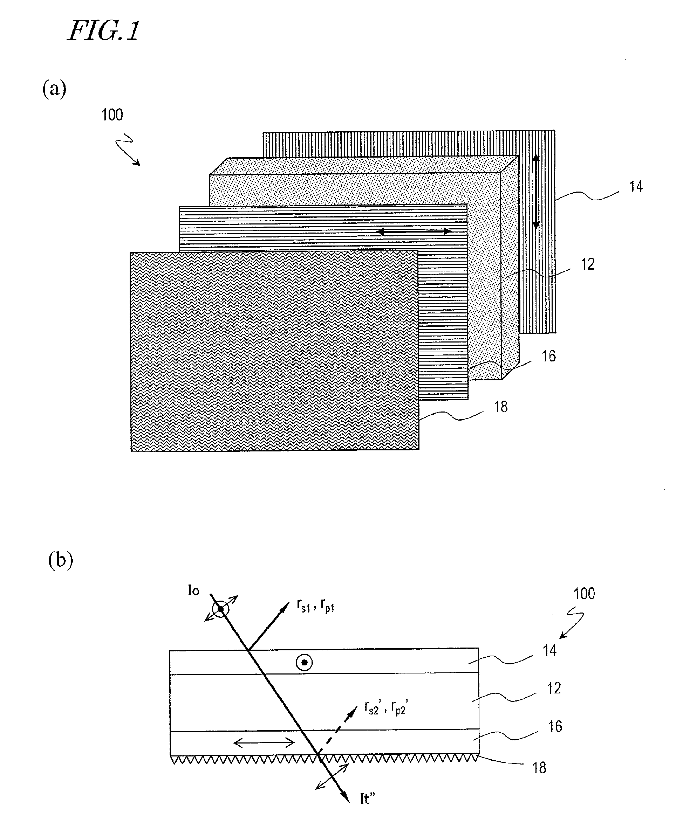

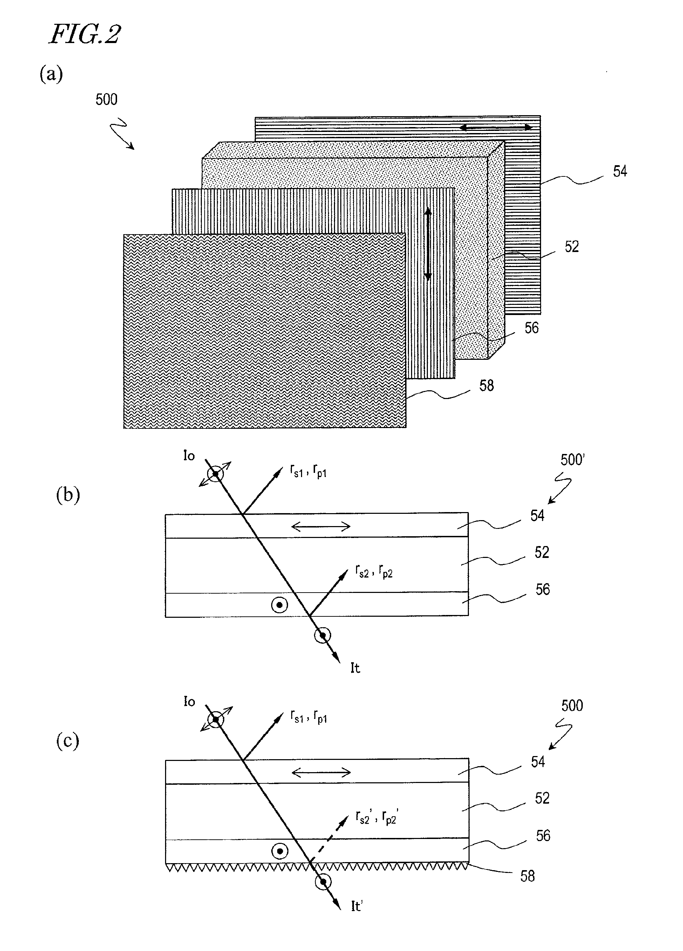

First, problems in a liquid crystal display panel including a moth-eye type antireflection layer, which were found by the present inventors, are described with reference to FIG. **2**. Then, the configuration and the functions and effects of a liquid crystal display panel of an embodiment of the present invention are described with reference to FIG. **1**. In general, the length in the horizontal direction in a display plane of a liquid crystal cell, such as a display panel for television devices, is longer than the length in the vertical direction, and therefore, the viewing angle characteristic in the horizontal direction is important. Thus, the viewing angle characteristic in the horizontal direction (3 o'clock to 9 o'clock direction, i.e., azimuth angle of 0°-180° direction) is considered below.

FIG. **2(a)** is an exploded perspective view schematically showing a liquid crystal display panel **500** of Comparative Example. FIGS. **2(b)** and **2(c)** are views of the liquid crystal display panel **500'** and the liquid crystal display panel **500** seen from the top, in which reflection of light emitted from a backlight is illustrated together. The liquid crystal display panel **500'** shown in FIG. **2(b)** is, for example, a VA mode liquid crystal display panel which is currently commercially available. The liquid crystal display panel **500** of Comparative Example shown in FIG. **2(c)** is equivalent to what is obtained by providing a moth-eye type antireflection layer **58** on the viewer side surface of the liquid crystal display panel **500'**.

The liquid crystal display panel **500'** of FIG. **2(b)** includes a liquid crystal cell **52,** a first polarizing plate **54** which is provided on the rear surface side (backlight side) of the liquid crystal cell **52,** and a second polarizing plate **56** which is provided on the viewer side of the liquid crystal cell **52.** As described above, as for the transmission axes of the polarizing plates of a VA mode liquid crystal display panel which is currently commercially available, the transmission axis (=polarization axis) of the first polarizing plate **54** is parallel to the horizontal direction (3 o'clock to 9 o'clock direction), and the transmission axis of the second polarizing plate **56** on the viewer side is parallel to the vertical direction (12 o'clock to 6 o'clock direction). The arrow shown at the polarizing plate **54, 56** represents the transmission axis. The liquid crystal display panel **500** of FIG. **2(c)** further includes a moth-eye type antireflection layer **58** over the viewer side surface of the liquid crystal display panel **500'**.

Next, the intensity of light emitted at the viewer side of the liquid crystal display panel in the black display state (black luminance) is evaluated. Hereinbelow, only reflection at the interface between the liquid crystal display panel and the air is considered, while reflections at the other interfaces are ignored. In the description below, symbols listed below are used.

$I_0$: Intensity of light emitted from the backlight and is incident on the first polarizing plate
$r_{s1}$: S-polarization reflectance of the first polarizing plate
$r_{p1}$: P-polarization reflectance of the first polarizing plate
$r_{s2}$: S-polarization reflectance of the second polarizing plate
$r_{p2}$: P-polarization reflectance of the second polarizing plate
$r_{s2}'$: S-polarization reflectance of the antireflection film
$r_{p2}'$: P-polarization reflectance of the antireflection film
As: S-polarization absorbance of the polarizing plate
Ap: P-polarization absorbance of the polarizing plate
$D_{PS}$: Depolarization ratio P-polarization $\rightarrow$ S-polarization
$D_{SP}$: Depolarization ratio S-polarization $\rightarrow$ P-polarization
It: Intensity of light emitted to the viewer side (Intensity of light transmitted through the liquid crystal panel)

The liquid crystal display panel **500'** is a conventional VA mode liquid crystal display panel. As shown in FIG. **2(b),** the transmission axis (=polarization axis) of the first polarizing plate **54** is parallel to the horizontal direction in the display plane, and the transmission axis of the second polarizing plate **56** is parallel to the vertical direction in the display plane.

Light which is emitted from the backlight and is incident on the first polarizing plate **54** is partially reflected, and therefore, the intensity of light which enters the first polarizing plate **54** is

$$(I_0/2)(1-r_{s1}) + (I_0/2)(1-r_{p1}).$$

Note that the light emitted from the backlight is unpolarized light and therefore contains 50% S-polarization and 50% P-polarization (=$I_0/2$). Note that the S-polarization is polarized light which oscillates vertically to the incidence plane (the direction of azimuth angle 0°-180°), i.e., oscillates vertically to the drawing sheets in FIGS. **2(b)** and **2(c).** The P-polarization is polarized light which oscillates in the incidence plane, i.e., oscillates parallel to the drawing sheets in FIGS. **2(b)** and **2(c).**

In the first polarizing plate **54,** the S-polarization is absorbed at absorbance As. Therefore, the intensity of light which is transmitted through the first polarizing plate **54** and is incident on the liquid crystal cell **52** is

$$(I_0/2)(1-r_{s1})(1-As) + (I_0/2)(1-r_{p1}).$$

The first term is substantially zero, and therefore, only the second term is to be considered. That is, it can be considered that only the P-polarization is incident on the liquid crystal cell **52.**

Of the P-polarization which is incident on the liquid crystal cell **52,** the intensity of light which is converted (depolarized) to S-polarization in, for example, the liquid crystal cell **52** is expressed as $(I_0/2)$ $(1-r_{p1})D_{PS}$. Of this light, a component which is not reflected at the second polarizing plate **56** or the air interface is emitted to the viewer side. Therefore, in the liquid crystal display panel **500'**, the intensity of light emitted at the viewer side, *It,* is expressed by the following formula (1):

$$I_t = (I_0/2) (1-r_{p1}) D_{PS} (1-r_{s2}) \qquad (1)$$

We consider that the depolarization is attributed to scattering or reflection by circuit components in the liquid crystal cell (e.g., TFTs and wires). In the black display state, the liquid crystal layer ideally does not give the P-polarization a phase difference. However, depolarization which is attributed to nonuniformity in the liquid crystal layer or birefringence caused by a retardation plate (herein omitted) can be considered. Here, it is assumed that depolarization from P-polarization to S-polarization and depolarization from S-polarization to P-polarization occur with equal probabilities.

Next, in the liquid crystal display panel **500** shown in FIG. **2(c),** the intensity of light emitted at the viewer side, $I_t'$, is evaluated. The liquid crystal display panel **500** is equivalent to what is obtained by providing the moth-eye type antireflection layer **58** on the viewer side of the conventional VA mode liquid crystal display panel **500'**. Therefore, in the liquid crystal display panel **500,** the intensity of light emitted at the viewer side, $I_t'$, is expressed by the following formula (2), which is obtained by replacing reflectance $r_{s2}$ of formula (1) with $r_{s2}'$:

$$I_t' = (I_0/2) (1-r_{p1}) D_{PS} (1-r_{s2}') \qquad (2)$$

Here, with the relationship of $r_{s2}'<<r_{s2}$, $I_t'>>I_t$ holds true. That is, when the moth-eye type antireflection layer **58** is provided on the viewer side surface of the conventional VA mode liquid crystal display panel **500'**, the transmittance in the black display state increases, so that the display quality deteriorates.

Next, in the liquid crystal display panel **500** of an embodiment of the present invention which is shown in FIG. **1,** the intensity of light emitted at the viewer side, $I_t''$, is evaluated.

In the liquid crystal display panel **100,** the arrangement of the transmission axes of a first polarizing plate **14** and a second polarizing plate **16** is inverse to that of the liquid crystal display panel **500**. Specifically, the transmission axis of the polarizing plate **14** is parallel to the vertical direction in the display plane, and the transmission axis of the polarizing plate **16** is parallel to the horizontal direction in the display plane.

Likewise as described above, light which is emitted from the backlight and is incident on the first polarizing plate **14** is partially reflected. Therefore, the intensity of light which enters the first polarizing plate **14** is

$$(I_0/2) (1-r_{s1}) + (I_0/2) (1-r_{p1}).$$

In the liquid crystal display panel **100,** P-polarization is absorbed at absorbance Ap in the first polarizing plate **14**. Therefore, the intensity of light which is transmitted through the first polarizing plate **14** and is incident on the liquid crystal cell **12** is

$$(I_0/2) (1-r_{s1}) + (I_0/2) (1-r_{p1}) (1-Ap).$$

The second term is substantially zero, and therefore, only the first term is to be considered. That is, it can be considered that only the S-polarization is incident on the liquid crystal cell **12.**

Of the S-polarization which is incident on the liquid crystal cell **12,** the intensity of light which is converted (depolarized) to P-polarization in, for example, the liquid crystal cell **12** is expressed as $(I_0/2)$ $(1-r_{s1})D_{SP}$. Of this light, a component which is not reflected at the second polarizing plate **16** and the air interface is emitted to the viewer side. Therefore, in the liquid crystal display panel **100,** the intensity of light emitted at the viewer side, $I_t''$, is expressed by the following formula (3):

$$I_t'' = (I_0/2) (1-r_{s1}) D_{SP} (1-r_{p2}') \qquad (3)$$

Here, as seen from the result of a calculation which will be described later, the relationship of

$$r_{s1}(=r_{s2})>r_{s2}'>r_{p2}\approx r_{p2}'$$

generally holds true.

Thus, $l_t''\approx l_t<l_t'$ holds true. When the configuration of the liquid crystal display panel **100** of an embodiment of the present invention is employed, deterioration of the display quality which is attributed to an increase of the black luminance which is caused by providing a moth-eye type antireflection film **18** can be prevented.

Hereinafter, some of the calculation results and experimental results are shown for describing the liquid crystal display panel of the embodiment of the present invention in more detail.

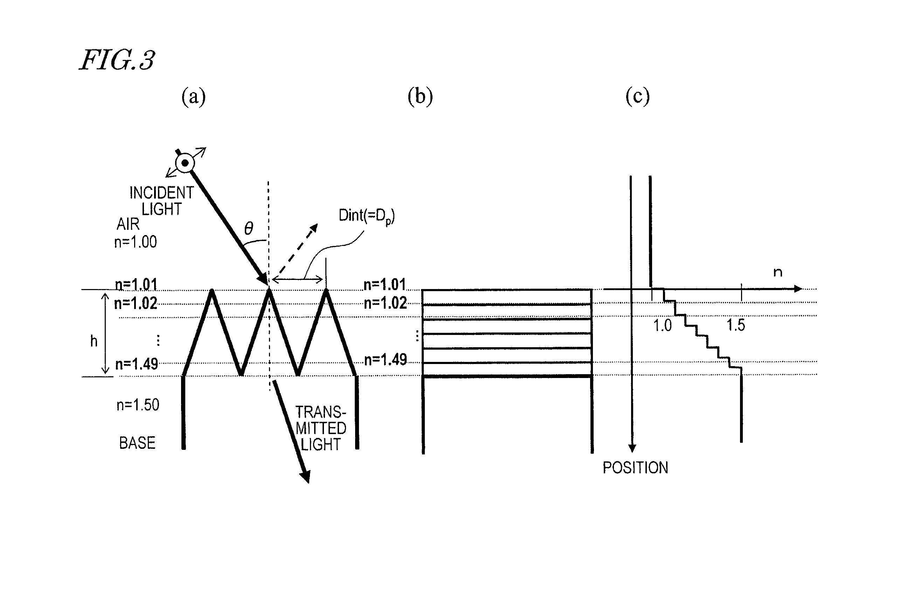

First, the configuration of the moth-eye type antireflection layer and a model which was used for the calculation are described with reference to FIG. **3.**

FIG. **3(a)** is a schematic cross-sectional view of the moth-eye type antireflection layer. The moth-eye structure has minute raised portions which are densely arranged. The minute raised portions of the moth-eye structure which have an antireflection function for visible light (wavelength: 380 nm to 780 nm) preferably have a conical shape or a bell-like shape. The height of the minute raised portions, *h,* is preferably about not less than 100 nm and not more than 600 nm. The distance between adjacent raised portions, *Dint,* is preferably approximately not less than 100 nm and not more than 600 nm. Here, a moth-eye structure which has minute raised portions whose cross section including a vertex is represented by an isosceles triangle as shown in FIG. **3(a)** is considered. In the calculation which will be exemplified later, it was assumed that the refractive index (effective refractive index) of the moth-eye structure linearly vary with respect to the height of the raised portions.

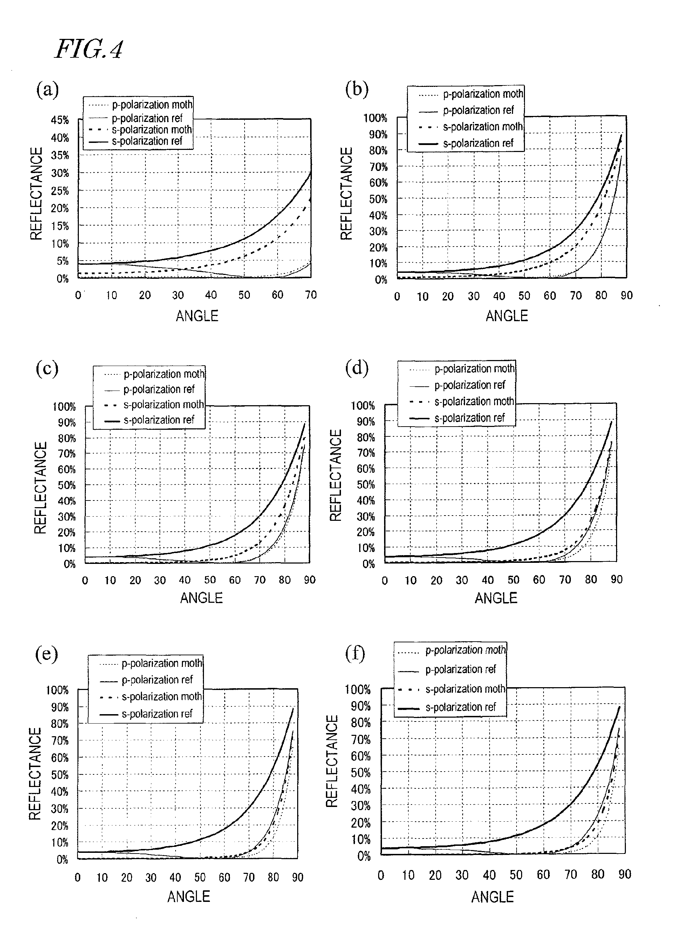

It can be considered that the refractive index (effective refractive index) of such a moth-eye structure is equivalent to the refractive index of a multilayer structure that includes a plurality of layers in which the refractive index increases from the air side to the base side as shown in FIG. **3(b).** That is, the refractive index of the moth-eye structure increases stepwise from the air side (refractive index n=1.00) to the base side (n=1.50) as shown in FIG. **3(c).** In the exemplified calculation, it was assumed that the number of layers is 30 and the layers have equal thicknesses. For six types of structures with the height of the raised portions, *h,* being 180 nm, 210 nm, 300 nm, 600 nm, 900 nm, and 1200 nm, the reflectances for S-polarization and P-polarization were calculated. The calculation of the reflectances was conducted based on the effective refractive index medium theory (for example, Tadao TSURUTA, *Applied* Optics (Baifu-kan), Chapter 4). For the sake of comparison, the reflectances for S-polarization and P-polarization at the flat surface of the base (n=1.50) were calculated. The calculation results are shown in FIGS. **4(a)** to **4(f).**

FIGS. **4(a)** to **4(f)** are graphs showing the calculation results of the reflectances for the S-wave and the P-wave of the moth-eye type antireflection layers with the height of the raised portions, h, being 180 nm, 210 nm, 300 nm, 600 nm, 900 nm, and 1200 nm, respectively, where the horizontal axis represents the incidence angle (polar angle).

First, refer to FIG. **4(a).** Considering the reflectances at a flat surface, the reflectance for P-polarization ("P-polarization ref") is 0 at about 56° (Brewster angle), while the reflectance for S-polarization ("S-polarization ref") increases as the incidence angle increases. The difference between the reflectance for S-polarization ("S-polarization ref") and the reflectance for P-polarization ("P-polarization ref") starts to abruptly increase approximately at a position where the incidence angle exceeds 50°. That is, it is appreciated that in the case of oblique incidence (polar angle: 50° to 80°), the reflectance for S-polarization ("S-polarization ref") is much larger than the reflectance for P-polarization ("P-polarization ref").

Next, see the reflectances of the moth-eye in FIG. **4(a).** It can be seen that the reflectance for P-polarization at the moth-eye surface ("P-polarization moth") is not substantially different from the reflectance for P-polarization at the flat surface ("P-polarization ref"). On the other hand, the reflectance for S-polarization at the moth-eye surface ("S-polarization moth") is smaller than the reflectance for S-polarization at the flat surface ("S-polarization ref"). That is, in the case of oblique incidence, the above-described relationship of $r_{s1}(=r_{s2})>r_{s2}'>r_{p2}\approx r_{p2}'$ holds true.

As clearly seen from the comparison of FIG. **4(a)** to FIG. **4(f),** as the height h of the raised portions increases, both the reflectance for S-polarization ("S-polarization moth") and the reflectance for P-polarization ("P-polarization moth") decrease. However, the decrease of the reflectance for S-polarization ("S-polarization moth") is greater than the decrease of the reflectance for P-polarization ("P-polarization moth"). For example, the reflectance for P-polarization ("P-polarization moth") in FIG. **4(c)** is not substantially different from the reflectance for P-polarization ("P-polarization moth") in FIG. **4(a).** On the other hand, the reflectance for S-polarization ("S-polarization moth") in FIG. **4(c)** is apparently smaller than the reflectance for S-polarization ("S-polarization moth") in FIG. **4(a). As** seen from FIGS. **4(d)** to **4(f),** the reflectance for P-polarization at the moth-eye surface ("P-polarization moth") is smaller than the reflectance for P-polarization at the flat surface ("P-polarization ref"). However, the reflectance for S-polarization at the moth-eye surface ("S-polarization moth") is smaller than the reflectance for S-polarization at the flat surface ("S-polarization ref") at a greater ratio. Thus, it is appreciated that, as for oblique incident light, the above-described relationship of $r_{s1}(=r_{s2})>r_{s2}'>r_{p2}\approx r_{p2}'$ holds true irrespective of the height of the raised portions of the moth-eye structure.

As described above, when the moth-eye type antireflection layer is provided, in the case of oblique incidence such that the incidence angle generally exceeds 50°, the reflectance for S-polarization and the reflectance for P-polarization significantly decrease, so that the transmittance for S-polarization significantly increases. As a result, as previously described with reference to FIG. 2, when the conventional VA mode liquid crystal display panel 500' is provided with a moth-eye type antireflection layer, the pale black state at oblique viewing angles becomes conspicuous.

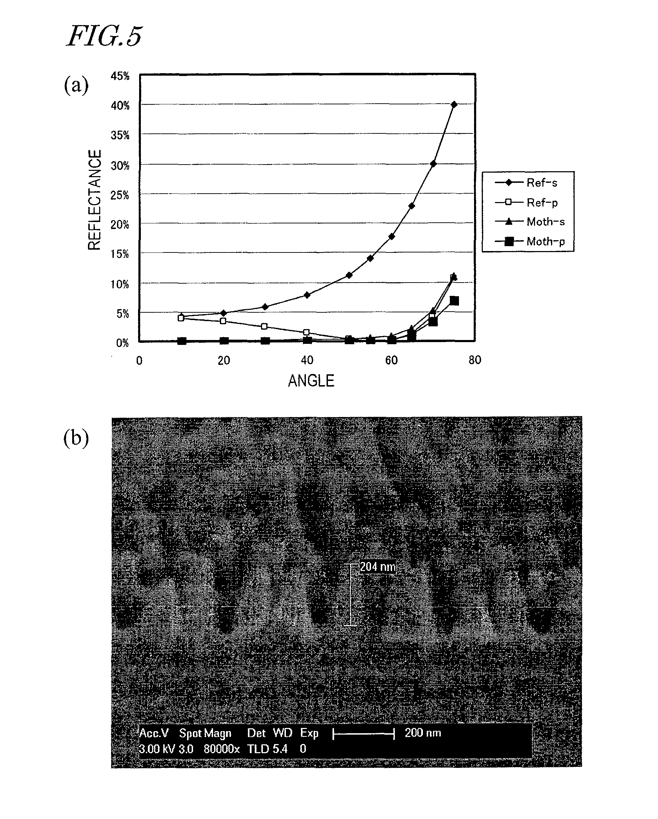

An example of the experimental results is described with reference to FIG. 5. FIG. 5(a) is a graph showing actually measured values of the reflectance for the S-wave and the P-wave of the moth-eye type antireflection layer. FIG. 5(b) shows a SEM image of the moth-eye type antireflection layer. The sample used in the experiment includes an antireflection layer which was formed of an acrylic UV-curable resin on a triacetylcellulose (TAC) film using a mold which had a porous alumina layer which was fabricated according to the method disclosed in Patent Document 4. The reflectance was measured by means of reflection spectrum measurement of specular reflection at the polar angle of 5° using a spectrophotometer V-550 manufactured by JASCO Corporation, with a TAC film which was provided with a moth-eye type antireflection layer as described above being placed over a black acrylic plate.

It can be seen that the incidence angle dependence of the reflectance shown in FIG. 5(a) considerably conforms with the results which have previously described with reference to FIG. 4. Comparing quantitatively, the graph of FIG. 5(a) is close to FIG. 4(d). However, as seen from FIG. 5(b), the height of the raised portions of the antireflection layer used herein is about 200 nm, which is only about a third of the height of the raised portions used in the calculation of FIG. 4(d), 600 nm. This inconsistency is probably attributed to the fact that scattered light affects the measurement of the reflectance of the actual samples.

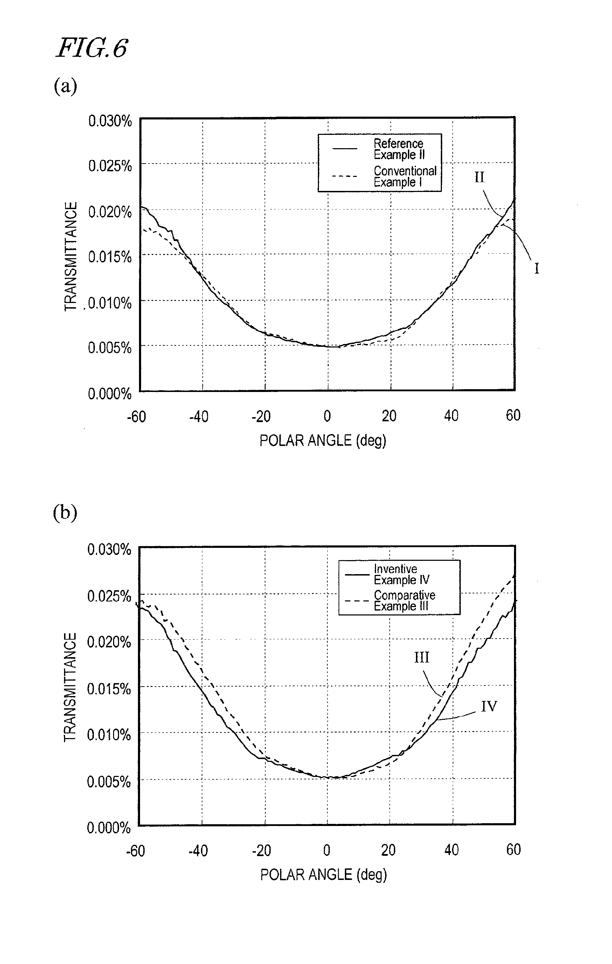

Next, an embodiment of the present invention is described with reference to FIG. 6, using a MVA mode liquid crystal display panel (Conventional Example I) which has been currently mass-produced by the applicant.

FIG. 6 shows graphs for illustrating the relationship between the arrangement of the transmission axes of the polarizing plates and the transmittance in the black display state (black luminance). FIG. 6(a) shows actually measured values in a case where a moth-eye type antireflection film was not provided. FIG. 6(b) shows actually measured values in a case where a moth-eye type antireflection film was provided. In the liquid crystal display panel of Conventional Example I, retardation layers are provided between the liquid crystal cell and two polarizing plates for improving the viewing angle characteristics. The backlight used was a cold cathode fluorescent lamp (CCFL) backlight.

In the liquid crystal display panel of Conventional Example I, the transmission axis of the polarizing plate on the rear surface side is parallel to the horizontal direction in the display plane, and the transmission axis of the polarizing plate on the viewer side is parallel to the vertical direction in the display plane. In the liquid crystal display panel of Reference Example II, the arrangement of the transmission axes of the polarizing plates is inverse to that of the liquid crystal display panel of Conventional Example I, the transmission axis of the polarizing plate on the rear surface side is parallel to the vertical direction in the display plane, and the transmission axis of the polarizing plate on the viewer side is parallel to the horizontal direction in the display plane. The liquid crystal display panel of Comparative Example III is equivalent to what is obtained by providing a moth-eye type antireflection layer on the viewer side surface of the liquid crystal display panel of Conventional Example I. The liquid crystal display panel of Inventive Example IV is equivalent to what is obtained by providing a moth-eye type antireflection layer on the viewer side surface of the liquid crystal display panel of Conventional Example I. The configurations of these examples are shown together in Table 1 below.

[Table 1]

| Conventional Example I | Reference Example II | Comparative Example III | Inventive Example IV |
|---|---|---|---|
| - | - | Moth-eye type reflection layer | Moth-eye type reflection layer |
| Viewer side polarizer (transmission axis 90°) | Viewer side polarizer (transmission axis 0°) | Viewer side polarizer (transmission axis 90°) | Viewer side polarizer (transmission axis 0°) |
| Retardation layer (slow axis 90°) | Retardation layer (slow axis 0°) | Retardation layer (slow axis 90°) | Retardation layer (slow axis 0°) |
| VA liquid crystal cell | VA liquid crystal cell | VA liquid crystal cell | VA liquid crystal cell |
| Retardation layer (slow axis 0°) | Retardation layer (slow axis 90°) | Retardation layer (slow axis 0°) | Retardation layer (slow axis 90°) |
| Rear surface side polarizer (transmission axis 0°) | Rear surface side polarizer (transmission axis 90°) | Rear surface side polarizer (transmission axis 0°) | Rear surface side polarizer (transmission axis 90°) |

(continued)

| Conventional Example I | Reference Example II | Comparative Example III | Inventive Example IV |
|---|---|---|---|
| Backlight | Backlight | Backlight | Backlight |

As seen from FIG. **6(a),** the difference in black luminance of the liquid crystal display panel between Conventional Example I and Reference Example II is small, and the arrangement of the transmission axes of the polarizing plates has a small effect on the black luminance. On the other hand, as seen from FIG. **6(b),** the black luminance of the liquid crystal display panel of Inventive Example IV is smaller than the black luminance of the liquid crystal display panel of Comparative Example III, and this difference is particularly conspicuous in a range of large polar angles. Thus, when a VA mode liquid crystal display panel is provided with a moth-eye type antireflection layer as described above, the black luminance at oblique viewing angles largely varies depending on the arrangement of the transmission axes of the polarizing plates. It can be seen that, by employing the arrangement of the present embodiment, the pale black state at oblique viewing angles can be prevented.

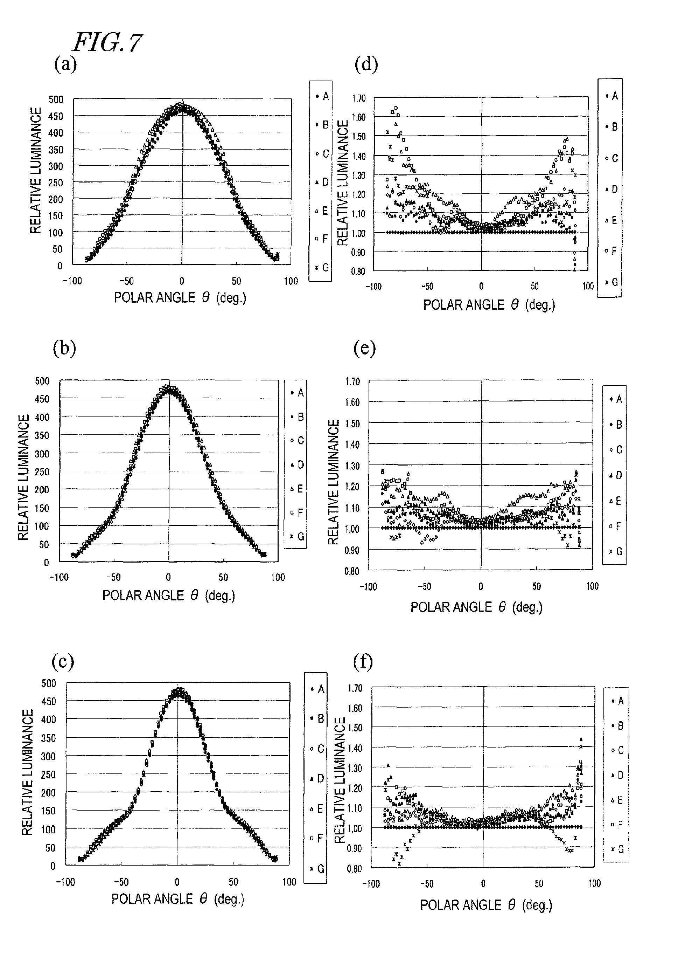

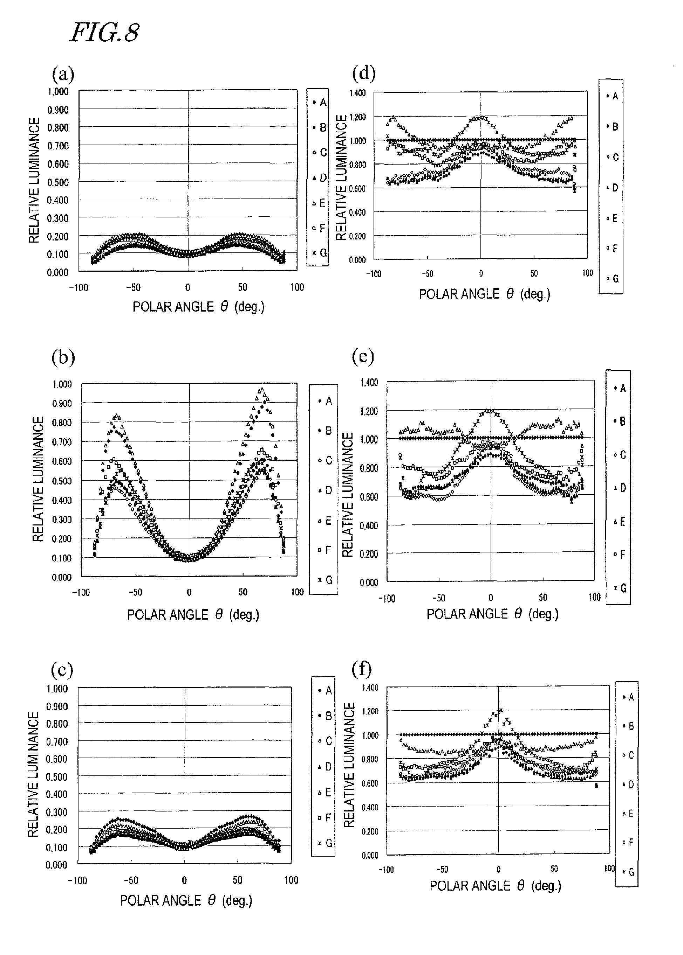

We examined the effects of the arrangement of the transmission axes of the polarizing plates on the display luminance in liquid crystal display panels which have different states of surface treatment in the viewer side surface. Next, the results of the examination are described with reference to FIG. **7** and FIG. **8.** FIG. **7** shows graphs for illustrating the polar angle dependence of the transmittance in the white display state (white luminance) of liquid crystal display panels whose viewer side surfaces were in different states of treatment. FIGS. **7(a)** to **7(c)** show the relative luminance. FIGS. **7(d)** to **7(f)** show the results normalized with respect to the white luminance of an untreated liquid crystal display panel (luminance increase rate). FIG. 8 shows graphs for illustrating the polar angle dependence of the transmittance in the black display state (black luminance) of liquid crystal display panels whose viewer side surfaces were in different states of treatment. FIGS. **8(a)** to **8(c)** show the relative luminance. FIGS. **8(d)** to **8(f)** show the results normalized with respect to the black luminance of an untreated liquid crystal display panel (luminance increase rate). As for the surface treatment, a plurality of combinations of the antiglare treatment (AG treatment) and the antireflection treatment were examined. In FIG. **7** and FIG. **8,** A to G represent the surface treatments listed below. The haze ratio was measured using a haze meter NDH2000 manufactured by NIPPON DENSHOKU INDUSTRIES CO., LTD., with a TAC film including a moth-eye type reflection layer being placed over a transparent glass plate.

A: Clear (Not treated: No AG treatment, No antireflection treatment)
B: Low Haze (Haze ratio 8.0%, No antireflection treatment)
C: Clear Low Reflection (Haze ratio 0.5%, Low reflection coating: Reflectance about 1%)
D: AGLR (Haze ratio 13.0%, Low reflection coating: Reflectance about 1%)
E: Clear Moth (Haze ratio 0.5%, Moth-eye type antireflection layer: Reflectance 0.1% or less)
F: Low Haze Moth (Haze ratio 1.7%, Moth-eye type antireflection layer: Reflectance 0.1% or less)
G: High Haze Moth (Haze ratio 30.0%, Moth-eye type antireflection layer: Reflectance 0.1% or less)

The liquid crystal display panel V used herein was a VA mode liquid crystal display panel which was manufactured using a $UV^2A$ technique. The transmission axis of the polarizing plate on the rear surface side was parallel to the horizontal direction in the display plane. The transmission axis of the polarizing plate on the viewer side was parallel to the vertical direction in the display plane. The backlight used was a LED backlight. The configuration of this liquid crystal display panel V is shown in Table 2.

[Table 2]

| Liquid Crystal Display Panel V |
|---|
| Surface Treatment |
| Viewer side polarizer (transmission axis 90°) |
| Retardation layer (slow axis 90°) |
| VA liquid crystal cell |
| Retardation layer (slow axis 0°) |
| Rear surface side polarizer (transmission axis 0°) |
| Backlight |

FIGS. **7(a)** and **7(d)** and FIGS. **8(a)** and **8(d)** show the polar angle dependence of the luminance or luminance increase rate in the horizontal direction in the display plane of the liquid crystal display panel (azimuthal angle 0°-180°). FIGS. **7(b)** and **7(e)** and FIGS. **8(b)** and **8(e)** show the polar angle dependence of the luminance or luminance increase rate in the diagonal 45° direction in the display plane of the liquid crystal display panel (azimuthal angle 45°-225°). FIGS. **7(c)** and **7(f)** and FIGS. **8(c)** and **8(f)** show the polar angle dependence of the luminance or luminance increase rate in the vertical direction in the display plane of the liquid crystal display panel (azimuthal angle 90°-270°). That is, in other words, FIGS. **7(c)** and **7(f)** and FIGS. **8(c)** and **8(f)** show the viewing angle dependence in the horizontal direction in the display plane (azimuthal angle 0°-180°) of a liquid crystal display device which is obtained by inverting the arrangement of the transmission axes of the polarizing plates of the conventional liquid crystal display device, and E, F, and G of FIGS. **7(c)** and **7(f)** and FIGS. **8(c)** and **8(f)** represent the viewing angle dependence in the horizontal direction in the display plane of the liquid crystal display panel of the embodiment of the present invention.

As seen from FIGS. **7(a)** and **7(d)**, the white luminance at oblique viewing angles of each of E, F, and G in which the moth-eye type antireflection layer was provided was larger than those of A to D. Also, as seen from the comparison of FIGS. **7(a)** and **7(d)** and FIGS. **7(c)** and **7(f)**, when the arrangement of the transmission axes of the polarizing plates was inverse to the conventional arrangement, the white luminance at oblique viewing angles of E, F, and G in which the moth-eye type antireflection layer was provided were reduced. The results of FIGS. **7(b)** and **7(e)** are in the middle between the results of FIGS. **7(a)** and **7(d)** and the results of FIGS. **7(c)** and **7(f)**.

As seen from FIGS. **8(a)** and **8(b)**, the black luminance at oblique viewing angles of E (Clear Moth) in which the moth-eye type antireflection layer was provided was larger than those of A to D, F and G. As seen from the comparison of E with F (Low Haze Moth) and G (High Haze Moth), the black luminance at oblique viewing angles can be suppressed by providing an AG property. Note that, it is appreciated that, G (High Haze Moth) exhibited an increased black luminance near the front direction, and therefore, the haze ratio is preferably not excessively high. The black luminance of B (Low Haze, Haze ratio 8.0%) near the front direction did not exceed A (Clear), and therefore, it is considered that the haze ratio only needs to be less than 10%.

As seen from the comparison of FIGS. **8(a)** and **8(d)** and FIGS. **8(c)** and **8(f)**, when the arrangement of the transmission axes of the polarizing plates is inverse to the conventional arrangement, the black luminance at oblique viewing angles of E (Clear Moth) in which the moth-eye type antireflection layer was provided is reduced to a level which is lower than the black luminance of A (Clear). Also, the black luminance at oblique viewing angles of F (Low Haze Moth) was reduced when the arrangement of the transmission axes of the polarizing plates was inverse to the conventional arrangement. The black luminance near the front direction of G which had a high haze value was larger than that of A (Clear) even when the arrangement of the transmission axes of the polarizing plates was inverse to the conventional arrangement and is therefore not preferred. Thus, from the viewpoint of the black luminance in the front viewing direction, the haze ratio is preferably less than 10%. The results of FIGS. **8(b)** and **8(e)** are in about the middle between the results of FIGS. **8(a)** and **8(d)** and the results of FIGS. **8(c)** and **8(f)**.

In the above description, the liquid crystal display panel V that has a configuration in which linear polarization is allowed to be incident on the liquid crystal layer has been exemplified. However, it may have a configuration in which circular polarization is allowed to be incident on the liquid crystal layer. The configuration of the liquid crystal display panel VI that utilizes circular polarization is shown in Table 3. The polarizing plate and the retardation layer (slow axis 135°) on the viewer side in the liquid crystal display panel V are sometimes collectively referred to as a circular polarizing plate. As a matter of course, what is simply referred to as "polarizing plate" in this specification is a linear polarizing plate. As in the liquid crystal display panel VI, the circular polarizing plate that is provided on the viewer side of the liquid crystal cell absorbs internal reflection of the liquid crystal display panel, and therefore, the display quality can be improved.

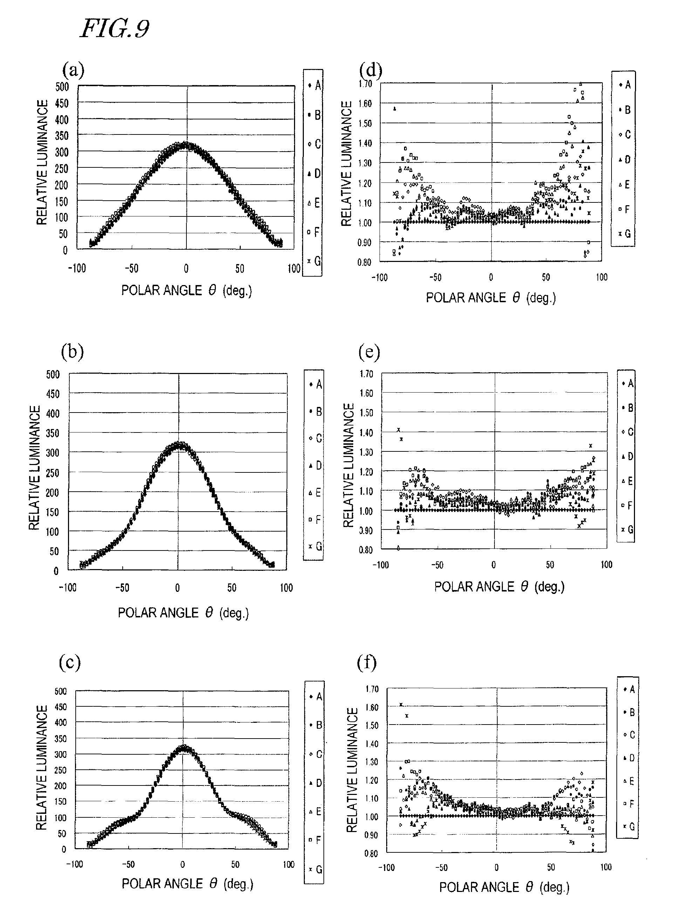

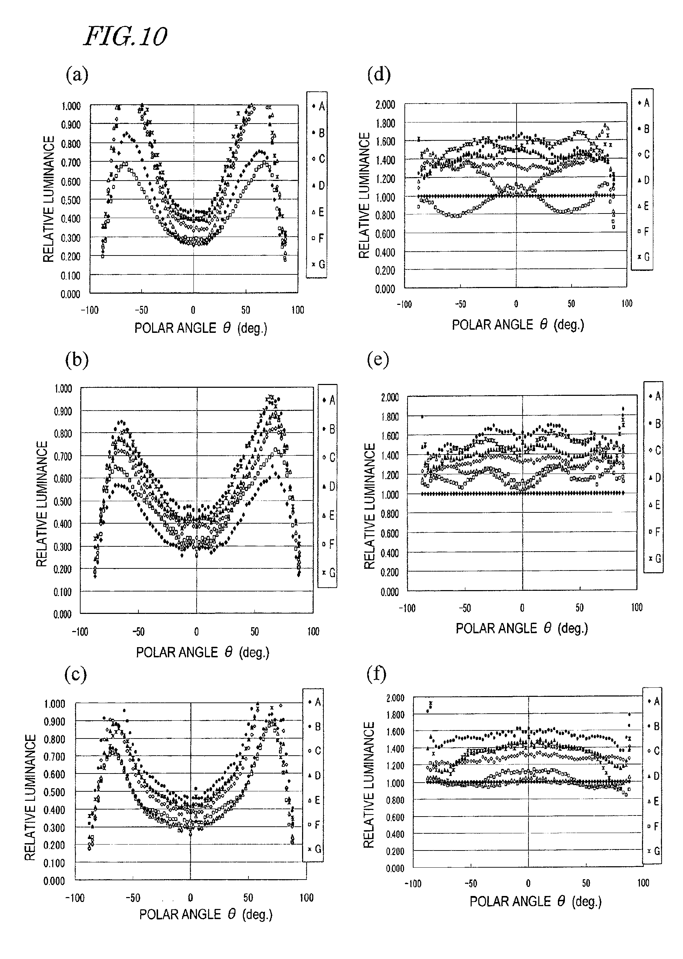

We examined the difference in the state of treatment of the viewer side surface in liquid crystal display panels which utilize circular polarization. The results of the examination are described with reference to FIG. **9** and FIG. **10**. FIGS. **9(a)** to **9(f)** correspond to FIGS. **7(a)** to **7(f)**, and FIGS. **10(a)** to **10(f)** correspond to FIGS. **8(a)** to **8(f)**.

[Table 3]

| Liquid Crystal Display Panel VI |
| --- |
| Surface Treatment |
| Viewer side polarizer (transmission axis 90°) |
| Retardation layer (slow axis 135°) |
| VA liquid crystal cell |
| Retardation layer (slow axis 45°) |

(continued)

| Retardation layer (slow axis 90°) |
| --- |
| Rear surface side polarizer (transmission axis 0°) |
| Backlight |

As seen from the comparison of FIG. **9** and FIG. **10** with FIG. **7** and FIG. **8,** generally the same results are also obtained from the liquid crystal display panels that utilize circular polarization. That is, E, F, and G in FIGS. **9(c)** and **9 (f)** and FIGS. **10(c)** and **10(f)** represent the viewing angle dependence in the horizontal direction in the display plane of the liquid crystal display panel of the embodiment of the present invention. It can be seen that both the white luminance and the black luminance at oblique viewing angles are reduced when the arrangement of the transmission axes of the polarizing plates is inverse to the conventional arrangement. Also, from the viewpoint of the black luminance in the front viewing direction, the haze ratio is preferably less than 10%.

Here, the VA mode liquid crystal display panel has been exemplified, although the present invention is not limited to the exemplified panel. The present invention is widely applicable to normally-black mode liquid crystal display panels, such as IPS mode and blue phase mode liquid crystal display panels. Note that the VA mode liquid crystal display panel and the blue phase mode liquid crystal display panel particularly have high black display quality, and therefore, the effects of the present invention are considerably achieved. The liquid crystal layer of the VA mode liquid crystal display panel is oriented in the normal direction of the substrate (i.e., the normal direction of the display plane) in the absence of an applied voltage and therefore does not exhibit optical anisotropy for linear polarization which is vertically incident on the display plane. The blue phase liquid crystal layer has optical isotropy not only for linear polarization which is vertically incident on the display plane but also for linear polarization which is obliquely incident on the display plane in the absence of an applied voltage and therefore has high black display quality.

## INDUSTRIAL APPLICABILITY

The present invention is widely applicable to VA mode liquid crystal display panels.

## REFERENCE SIGNS LIST

| | |
| --- | --- |
| **12** | liquid crystal cell |
| **14** | first polarizing plate |
| **16** | second polarizing plate |
| **18** | moth-eye type antireflection layer |
| **100** | liquid crystal display panel |

## Claims

1. A liquid crystal display panel which is capable of displaying in a normally black mode, comprising:

   a liquid crystal cell which includes a liquid crystal layer and a pair of substrates;
   a first polarizing plate provided on a rear surface side of the liquid crystal cell;
   a second polarizing plate provided on a viewer side of the liquid crystal cell; and
   an antireflection layer provided on a viewer side of the second polarizing plate, the antireflection layer having a moth-eye structure,
   wherein a transmission axis of the first polarizing plate is parallel to a vertical direction in a display plane, and a transmission axis of the second polarizing plate is parallel to a horizontal direction in the display plane.

2. The liquid crystal display panel of claim 1, wherein the liquid crystal display panel is a vertical alignment mode, IPS mode, or blue phase mode liquid crystal display panel.

3. The liquid crystal display panel of claim 1 or 2, wherein a length of the liquid crystal cell along the horizontal direction in the display plane is greater than a length of the liquid crystal cell along the vertical direction in the display plane.

**4.** The liquid crystal display panel of any of claims 1 to 3, further comprising an antiglare layer provided on a viewer side of the second polarizing plate,
wherein a haze ratio of the antiglare layer is less than 10%.

**5.** The liquid crystal display panel of claim 4, wherein the antiglare layer is integral with the antireflection layer.

**6.** A liquid crystal display device, comprising:

the liquid crystal display panel as set forth in any of claims 1 to 5; and
a backlight unit provided on a rear surface side of the first polarizing plate.

## FIG.1

(a)

(b)

*FIG.2*

(a)

(b)

(c)

*FIG.3*

(a)

INCIDENT
LIGHT
AIR
n=1.00

θ

Dint(=D$_p$)

n=1.01
n=1.02

h

n=1.49

n=1.50

BASE

TRANS-
MITTED
LIGHT

(b)

n=1.01
n=1.02

n=1.49

(c)

n

1.0    1.5

POSITION

## FIG.4

(a)

(b)

(c)

(d)

(e)

(f)

## FIG.5

(a)

(b)

## FIG.6

(a)

(b)

*FIG.7*

*FIG.8*

(a)

(b)

(c)

(d)

(e)

(f)

# FIG.9

(a)

(b)

(c)

(d)

(e)

(f)

*FIG.10*

(a)

(b)

(c)

(d)

(e)

(f)

<table>
<tr><td colspan="2" align="center">**INTERNATIONAL SEARCH REPORT**</td><td colspan="2">International application No.<br>PCT/JP2011/068392</td></tr>
</table>

A.  CLASSIFICATION OF SUBJECT MATTER
*G02F1/1335*(2006.01)i, *G02B1/11*(2006.01)i, *G02B5/02*(2006.01)i, *G02B5/30*
(2006.01)i

According to International Patent Classification (IPC) or to both national classification and IPC

B.  FIELDS SEARCHED

Minimum documentation searched (classification system followed by classification symbols)
G02F1/1335, G02B1/11, G02B5/02, G02B5/30

Documentation searched other than minimum documentation to the extent that such documents are included in the fields searched
Jitsuyo Shinan Koho         1922-1996   Jitsuyo Shinan Toroku Koho    1996-2011
Kokai Jitsuyo Shinan Koho   1971-2011   Toroku Jitsuyo Shinan Koho    1994-2011

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| A | JP 2009-230132 A  (Sony Corp.),<br>08 October 2009 (08.10.2009),<br>entire text; all drawings<br>& US 2010/0118404 A1    & EP 2246716 A1<br>& WO 2009/107871 A1      & CN 101680969 A<br>& KR 10-2010-0116523 A | 1-6 |
| A | JP 2008-216733 A  (Toshiba Matsushita Display<br>Technology Co., Ltd.),<br>18 September 2008 (18.09.2008),<br>entire text; all drawings<br>& US 2008/0218866 A1 | 1-6 |

[X]  Further documents are listed in the continuation of Box C.    [ ]  See patent family annex.

| | | |
|---|---|---|
| * | Special categories of cited documents: | |
| "A" | document defining the general state of the art which is not considered to be of particular relevance | "T"  later document published after the international filing date or priority date and not in conflict with the application but cited to understand the principle or theory underlying the invention |
| "E" | earlier application or patent but published on or after the international filing date | "X"  document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"  document member of the same patent family |

| Date of the actual completion of the international search<br>    26 September, 2011 (26.09.11) | Date of mailing of the international search report<br>    04 October, 2011 (04.10.11) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2011/068392

C (Continuation).　DOCUMENTS CONSIDERED TO BE RELEVANT

| Category* | Citation of document, with indication, where appropriate, of the relevant passages | Relevant to claim No. |
|---|---|---|
| A | WO 2009/019839 A1　(Sharp Corp.),<br>12 February 2009 (12.02.2009),<br>entire text; all drawings<br>& US 2010/0134733 A1　　& EP 2180368 A1<br>& WO 2009/019839 A1　　& CN 101772726 A<br>& KR 10-2010-0017962 A | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11242225 A
- US 6724452 B
- JP 2000155317 A
- US 6879364 B
- JP 11352486 A
- JP 2002277877 A
- JP 11133429 A
- JP 10123576 A
- JP 2001517319 PCT
- JP 2003531962 PCT
- JP 2005156695 A
- WO 2006059686 A